# EUROPÄISCHE PATENTSCHRIFT

(11) **EP 2 137 434 B1**
(45) Veröffentlichungstag und Bekanntmachung des Hinweises auf die Patenterteilung: **27.02.2013**
(21) Anmeldenummer: 08734463.6
(22) Anmeldetag: 04.04.2008
(51) Int. Cl.: F16H 48/08, F16H 57/08

(54) **MIT EINEM ANTRIEBSRAD VERSEHENES DIFFERENTIAL**
DIFFERENTIAL PROVIDED WITH A DRIVE WHEEL
DIFFERENTIEL PRESENTANT UNE ROUE MOTRICE

(30) Priorität: 05.04.2007 DE 102007016939; 04.04.2008 DE 102008017221
(43) Veröffentlichungstag der Anmeldung: 30.12.2009
(73) Patentinhaber: Neumayer Tekfor Holding GMBH, 77756 Hausach (DE)
(72) Erfinder: VOGEL, Manfred, 77876 Kappelrodeck (DE); SZENTMIHÀLYI, Volker, 77793 Gutach (DE); DERSE, Matthias, 79215 Elzach (DE)
(86) Internationale Anmeldenummer: PCT/DE2008/000576
(87) Internationale Veröffentlichungsnummer: WO 2008/122276

(56) Entgegenhaltungen:
- EP-A- 1 624 229
- WO-A-2005/008091
- DE-A1- 10 212 671
- DE-A1- 10 304 124
- DE-A1- 19 631 937
- DE-U1- 8 320 356
- US-A1- 2004 134 307

## Beschreibung

Derartige Differentiale, insbesondere für Kfz, sind beispielsweise durch die US 6 176 152 B1 bekannt geworden. Dabei sind je 1 Paar Ausgleichskegelräder und Achskegelräder in einem aus 2 Hälften bzw. Teilen gebildeten Gehäuse vorgesehen, wobei das eine Gehäuseteil auch den Flansch für den Zahnkranz aufweist, welcher in der Regel durch Schmieden oder durch Schmieden und anschließendes Ringwalzen hergestellt ist, wobei nach dem Schmieden die spanabhebende Bearbeitung erfolgt und die Wärmebehandlung, sowie ggf. eine Feinbearbeitung der Verzahnung.

Danach wird der Zahnkranz auf dem Flanschteil befestigt, z. B. verschweißt, vernietet, verschraubt oder dergleichen.

In dieser US-PS ist zum Stand der Technik auf eine Ausführung verwiesen, bei der das Gehäuse und der flanschartige Befestigungsbereich für den Zahnkranz ein einteiliges Gussteil ist. Da dieses kugelförmige und einteilige, mit einem Befestigungsflansch für den Zahnkranz versehene Differentialgehäuse durch Gießen hergestellt werden muss, ist damit eine aufwändige spanende Bearbeitung in Verbindung mit einer schlechten Zugänglichkeit, insbesondere der Innenbereiche, verbunden. Auch ist die Montage sowohl des Ausgleichsbolzens als auch der Ausgleichsräder und der Achskegelräder auf deren Achsen und in das Gehäuse hinein äußerst schwierig, umständlich und aufwändig. Außerdem sind zwischen den Kegelrädern und den rückseitig anliegenden Gehäuseflächen noch Gleiteinsätze vorzusehen, was die Montage bei den dort vorherrschenden engen Platzverhältnissen und wegen der schlechten Zugänglichkeit die oben angeführten Nachteile noch verstärkt.

Bei dem Gegenstand der US-PS ist das Gehäuse dagegen zweiteilig ausgebildet, wobei die beiden Gehäuseteile, ausgehend von einer Ronde, durch Drückwalzen hergestellt werden und anschließend nach der spanenden Bearbeitung zusammengefügt werden. Außerdem ist noch der Zahnkranz zu befestigen.

Dieses Befestigen des Zahnkranzes bedeutet einen hohen Arbeitsaufwand, zumal die Fügeflächen sowohl am Zahnkranz als auch auf dem Befestigungsbereich des Flansches bearbeitet werden müssen und zwar mit hoher Genauigkeit, damit die Rundlauf- wie auch die Planlaufanforderungen an das gesamte Aggregat erfüllt werden können. Hierbei können sich weiterhin Toleranzen aus der Bearbeitung der Einzelteile bei ungünstigem Zusammenfallen dieser Abweichungen zusätzlich zu den Montagetoleranzen aufaddieren.

Das Dokument DE 10 304 124 A1 offenbartalle Merkmale des Oberbegriffs des Anspruchs 1.

Der vorliegenden Erfindung lag die Aufgabe zugrunde, die genannten Nachteile zu beseitigen und ein Differential zu schaffen, das preiswert und einfach in der Herstellung ist, das sich durch die Möglichkeit einer einfachen Bearbeitung der Funktionsflächen und der Verringerung von Bauteilen sowie einer einfacheren und preiswerteren Montage auszeichnet. Weiterhin soll Gewicht reduziert und der erforderliche Bauraum verkleinert werden. Außerdem soll eine einfache Anbindung von An- bzw. Abtriebswellen an das Differential ermöglicht, um weiterhin günstige Voraussetzungen zur Direktanbindung von Gelenken und Gelenkwellen zu schaffen, um somit kompaktere Gelenke einsetzen zu können, insbesondere Gleichlaufgelenke mit Steckanbindung, anstelle einer Flanschanbindung. Des weiteren soll der Umfang von vormontierten Teilen vergrößert und außerdem der Stand der Technik verbessert werden.

Eine erste Lösung gemäß der Erfindung sieht vor, dass bei einem mit Antriebsrad versehenen Differential mit in einem geteilten Gehäuse untergebrachten Kegelradpaaren, und zwar je einem Paar Achskegelrädern und einem Paar Ausgleichskegelrädem, die über Lagerzapfen im Gehäuse drehbar gelagert sind eines der Gehäuseteile einstückig mit dem Flansch und der Verzahnung des Antriebsrades ausgebildet ist.

Durch die einteilige Ausgestaltung des einen Gehäuseteiles mit dem Flansch des Antriebsrades und der Verzahnung ist zunächst die Anzahl der Einzelteile, die ansonsten getrennt hergestellt werden müssen, verringert, wodurch die notwendigen Fügeflächen entfallen, sowie die Bearbeitung derselben und deren Montage.

Durch die zweiteilige Ausführung des Gehäuses ist dieses offen für eine einfache Bearbeitung der Funktionsflächen innen, der Anlageflächen für die Kegelräder bzw. für die zwischen Kegelrad und Anlageflächen vorgesehenen Gleitteile, sowie ggf. für die Bearbeitung der Lagerstellen für die Kegelradzapfen bzw. die Aufnahmebohrungen für die Lagerzapfen der Ausgleichskegelräder.

Dabei ist es vorteilhaft, wenn die beiden Gehäuseteile über eine Trenn- bzw. Fügestelle miteinander verbunden sind, die sich zweckmäßigerweise zumindest annähernd im axialen Bereich der Verzahnung des Antriebsrades befindet. Dabei kann die Trenn- bzw. Fügestelle aufgeteilt sein in eine Zentrierfläche an beiden Teilen und eine axiale Anlagefläche, ebenfalls auf beiden Bauteilen.

Wird gemäß einem weiteren Merkmal der Erfindung das eine Gehäuseteil mitsamt dem Flansch und der Verzahnung und/oder das andere Gehäuseteil durch einen Massivumformvorgang hergestellt, beispielsweise durch Kalt- und/oder Warmumformen, wie Schmieden, Fließpressen oder dergleichen, so ergeben sich weitere Vorteile, nämlich zunächst eine hohe Materialausnutzung, weil bei der Herstellung des getrennten Zahnkranzes nach dem Stand der Technik, z. B. durch Schmieden und anschließendes Ringwalzen, nicht unbeträchtlicher Abfall entsteht. Gegenüber einer zweiteiligen Ausführungsform (mit Gehäuseteil mit Flanschteil sowie getrenntem, durch Schmieden und anschließendes Ringwalzen hergestelltem Zahnkranz), wird bei der Erfindung demgegenüber auch insofern der Materialeinsatz reduziert, als der beim Schmieden nicht zu vermeidende Butzen eingespart wird.

Weiterhin kann Material dadurch eingespart werden, dass gegenüber einer Ausführungsform mit z. B. angeschraubtem Zahnkranz die einander axial oder radial überdeckenden Bereiche von Zahnkranz und Flansch entfallen. Das Massivumformen bietet weiterhin den Vorteil einer endkontumahen Fertigung, so dass die erforderliche spanende Bearbeitung reduziert wird und insgesamt die Wandstärken sowohl wegen des geringeren Bearbeitungsaufmaßes geringer ausgeführt werden können, als auch wegen der höheren Festigkeit gegenüber Gussteilen.

Darüber hinaus kann Gewicht und Material eingespart werden, indem im Flanschbereich Ausnehmungen vorgesehen sind, wobei es zumindest in dieser Hinsicht besonders vorteilhaft sein kann, wenn das Antriebsrad zwischen seinem Nabenbereich und dem Verzahnungsbereich speichenartig ausgebildet ist, so dass lediglich relativ dünne Stege verbleiben.

Weiterhin kann es vorteilhaft sein, das Differential derart auszubilden, dass dasjenige der Gehäuseteile die Aufnahmeöffnungen für den oder die Lagerzapfen für die Ausgleichskegelräder aufweist, welches einstückig ist mit dem die Verzahnung aufweisenden Antriebsrad.

Für manche Anwendungsfälle kann es jedoch vorteilhaft sein, wenn nicht das einstückig mit der Verzahnung ausgebildete Antriebsrad dasjenige Gehäuseteil ist, in welchem die Lagerzapfen der Ausgleichskugelräder aufgenommen sind, sondern das andere. Es ist dann das die Aufnahmeöffnungen für die Lagerzapfen der Ausgleichskugelräder aufnehmende Gehäusebauteil gewissermaßen dasjenige mit dem größeren Gehäuseanteil, also der Differentialkorb, und das andere gewissermaßen der Deckel für das Gehäuse.

Es kann gemäß einer weiteren Lösung vorteilhaft sein, wenn wenigstens eines der Achskegelräder - und/oder für bestimmte Anwendungsfälle wenigstens eines der Ausgleichskegelräder - einstückig ausgebildet ist mit dem zugehörigen Kegelradzapfen. Dies hat unter anderem den Vorteil, dass im Gegensatz zu den bisherigen Lösungen, bei denen Kegelrad und Zapfen getrennt hergestellte und dann zu montierende Teile sind, weder beim Kegelrad noch auf dem Anschlussbereich des Zapfens irgendeine Bearbeitung, wie Räumen, Verzahnungsfräsen - oder wälzen vorgenommen zu werden braucht.

Weiterhin kann es vorteilhaft sein, wenn wenigstens eines der Kegelräder, von seiner Stirnseite ausgehend, in Richtung auf den Zapfen gesehen, eine Ausnehmung aufweist, und/oder eine Ausnehmung im Lagerzapfen auf der der Stirnseite abgekehrten Seite vorgesehen ist, so dass auch hier Material und Gewicht gespart werden kann, ohne die Festigkeit zu beeinträchtigen, wobei das Anformen keine zusätzlichen Arbeitsgänge notwendig macht, weil das Anformen dieser Ausnehmung in einem der ohnehin erforderlichen Arbeitsgänge erfolgen kann.

Zur Lagerung der Ausgleichskegelräder können, wenn Ausgleichskegelrad und Lagerbolzen nicht einstückig ausgebildet sind, für jedes der Achskegelräder je ein eigener Lagerbolzen verwendet wird, der insbesondere in der entsprechenden Gehäusehälfte eingepresst ist. Dies ergibt eine leichtere Montierbarkeit als bei den Differentialen des Standes der Technik.

Ist wenigstens eines der Ausgleichskegelräder einstückig mit seinem Lagerzapfen ausgebildet, so kann es zweckmäßig sein, diesen Zapfen bzw. Bolzen lediglich als Stummel oder Ansatz auszubilden, der dann im wesentlichen die Zentrierfunktion, also nicht die Funktion einer Lagerung, für das Ausgleichskegelrad hat und der dann auch nicht gänzlich durch das entsprechende Gehäuseteil hindurchzuragen braucht.

Insbesondere im Falle einer einstückigen Ausgestaltung von Achskegelrad und/oder Ausgleichskegelrad mit Zapfen kann gemäß einer weitergehenden Lösung in vorteilhafter Weise die Anbindung der entsprechenden Antriebswellen, wie Seitenwellen, Längswellen, auch Nebenabtriebswellen, direkt an den aus dem Differentialgehäuse herausragenden Kegelradzapfen erfolgen, und zwar ohne aufwändige Flanschverbindung. Derartige Anbindungen von Antriebswellen an mit Keilverzahnung versehenen, aus dem Differential herausragenden Kegelradzapfen, können dabei in besonders günstiger Weise erfolgen, wie dies beispielsweise in den DE-Patentanmeldungen 10 2006 039 575.1, 10 2004 048 079 A1, 103 44 703 A1, EP 1 519 063 A2, WO's 98/35174 und 2006/037389A1 beschrieben bzw. beansprucht ist und die integraler Bestandteil der vorliegenden Erfindung sind.

Eine zusätzliche Lösung der der vorliegenden Erfindung zugrunde liegenden Aufgabe ergibt ein Achsaggregat für Kraftfahrzeuge, welches entweder zwischen zwei Getrieben - einem Getriebe und z. B. einem Differential oder z. B. zwischen einem Verteilergetriebe und einem Differential, letzteres insbesondere für eine angetriebene Vorderachse - oder aber zur Verwendung zwischen einem Getriebe und einem anzutreibenden Rad mit einem Differential, insbesondere mit einem solchen, dessen wenigstens eines der Achskegelräder einstückig mit dem zugeordneten Kegelradzapfen ausgebildet ist, an dessen dem Achskegelrad abgekehrter Seite über eine Verbindung wie eine Keilwellenverzahnung, das Gelenkinnenteil eines Gleichlaufdrehgelenkes befestigbar ist und wobei am Gelenkaußenteil die Antriebswelle des Achsaggregates befestigbar und zwischen Achskegelrad und dem weiteren Getriebe oder dem anzutreibenden Rad wenigstens eine, eine Längsverschiebung zulassende Einheit vorgesehen ist. Diese, eine Längsverschiebung zulassende Einheit kann dabei in besonders günstiger Weise ein Gleichlaufdrehgelenk sein, welches auch eine Axialverschiebung zulässt.

Hierfür kann der oder die Kegelradzapfen, insbesondere wenn das Achskegelrad einstückig mit dem Kegelradzapfen ist, der Kegelradzapfen an seinem der entsprechenden Antriebswelle zugewandten Ende ein Profil haben, wie eine Längsverzahnung, die zur Aufnahme eines Innenglenkteiles eines Gleichlaufdrehgelenkes dient, an dessen Gelenkaußenteil eine Antriebswelle angebunden ist.

Eine weitere günstige Ausführungsform ergibt sich, wenn der Differentialkorb mit Ausnehmungen versehen ist, was wiederum Gewichts- und Kosteneinsparungen ergibt.

Die bereits erwähnte Fügestelle zwischen Differentialkorb und dem weiteren Gehäuseteil ist zweckmäßiger Weise außerhalb der radialen Abstützbereiche für die Ausgleichskegelräder vorgesehen. Dies gewährleistet geringen Verschleiß, weil die Kegelräder dann nicht über irgendwelche Fügestellen gleiten müssen.

Eine weitere Lösung ist dadurch gebildet, dass der Differentialkorb bügelartig ausgebildet ist und dann lediglich die Aufnahmeöffnungen bzw. Lagerstellen für die Lagerbolzen, Lagerzapfen oder Lagerwellen der Ausgleichskegelräder sowie eines der Lagerzapfen eines der Kegelräder beinhaltet. Dies stellt die optimale Form einer möglichen Materialeinsparung dar, die aber noch, je nach den Festigkeitsansprüchen, durch Aussparungen in den Bügeln weiter verbessert werden kann.

Anhand der Figuren 1 - 6 sei die Erfindung näher erläutert.

Dabei zeigt
Figur 1 eine nicht beanspruchte Ausführungsform des erfindungsgemäßen Differentials im Schnitt,
Figur 2 eine weitere nicht beanspruchte Ausführungsvariante,
Figur 3 und 4 je eine Ansicht aus der Richtung des Pfeiles 3, 4 der Figur 1 oder 2,
Figur 5 ein zumindest teilweise dargestelltes Achsaggregat,
Figur 6 eine Ansicht A-A der Figur 5.

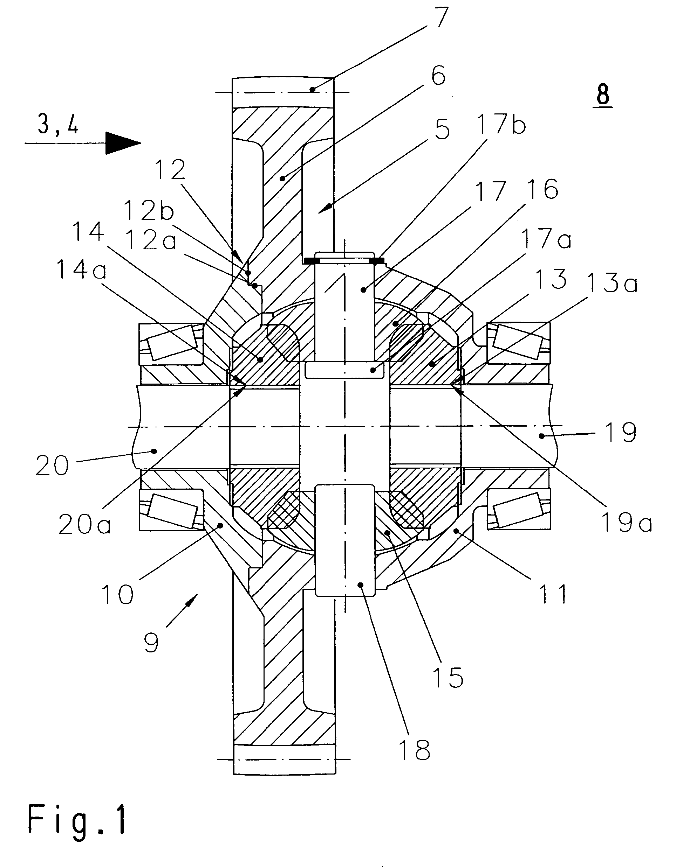

In Figur 1 ist das mit einem Antriebsrad 5 mit auf einem Flanschbereich 6 desselben vorgesehener Verzahnung 7 versehene Differential 8 gezeigt.

Ein Gehäuse 9 besteht hier aus 2 Gehäusehälften 10, 11, die über eine Stoßstelle 12 zusammengefügt sind. Diese Stoßstelle hat für jedes Gehäuseteil eine Zentrierfläche 12a und beiden Gehäuseteilen ist je eine Anschlagfläche 12b angeformt.

Das Gehäuse 9 enthält ein Paar Achskegelräder 13, 14 und ein Paar Ausgleichskegelräder 15, 16.

Die Ausgleichskegelräder 15, 16 sind auf je einem Lagerbolzen 17, 18 drehbar gelagert.

Der Lagerbolzen 18 ist hier über einen Presssitz im Gehäuseteil 11 befestigt. Der Bolzen 17 besitzt einen Bund 17a und ist über einen Sprengring 17b gesichert.

Die Achskegelräder 13, 14 sind mit einer Keilwellenverzahnung 13a, 14a auf einer Gegenverzahnung 19a, 20a der Kegelradzapfen 19, 20 aufgenommen.

Im vorliegenden Ausführungsbeispiel sind die Ausgleichskegelräder 15, 16 in demjenigen Gehäuseteil 11 aufgenommen, welches auch den Flansch 6 angeformt hat.

Die Verzahnung 7 ist einstückig mit dem Flansch hergestellt und zwar gemeinsam mit dem Flanschteil und dem Gehäuseteil 11 durch Massivumformen mit anschließender spanender Bearbeitung. Das Gehäuseteil 11 stellt hier den Differentialkorb dar.

Das Gehäuseteil 11 wird nach erfolgter Montage der Ausgleichsbolzen 17, 18, der Ausgleichskegelräder 15, 16 und der Achskegelräder 13, 14 (mit oder ohne vormontierten Kegelradzapfen 19, 20) durch Aufstecken des als Deckel ausgebildeten Gehäuseteiles 10 verschlossen. Danach erfolgt zweckmäßigerweise ein Verschweißen der Gehäuseteile 10 und 11.

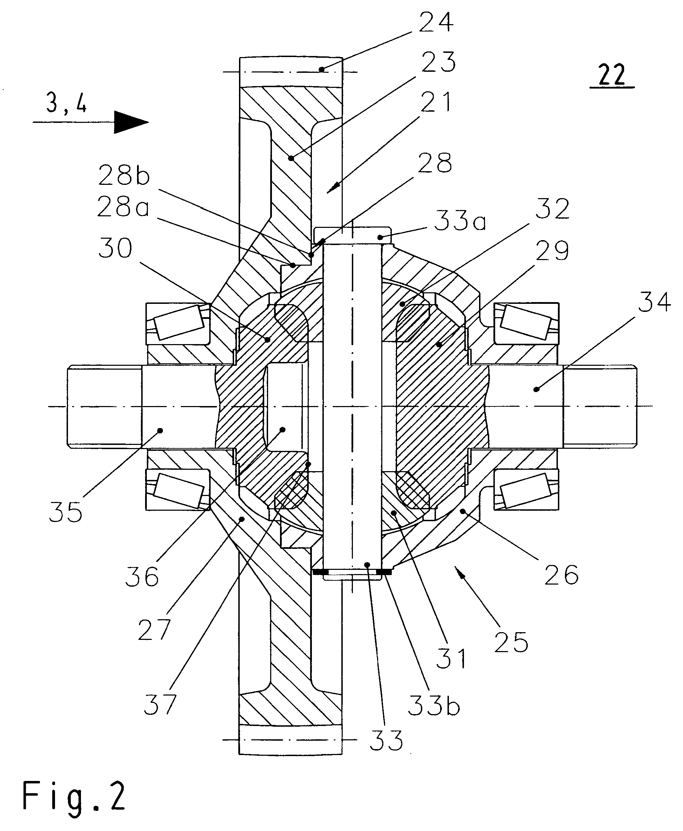

In Figur 2 ist wiederum erkennbar das Antriebsrad 21 des Differentials 22 mit seinem Flanschbereich 23 und der ebenfalls einstückig angeformten Verzahnung 24.

Das Gehäuse 25 besteht ebenfalls aus 2 Gehäusehälften 26 und 27, die über die Stoßstelle 28, die verschweißt sein kann, zusammengefügt sind.

Das Gehäuse 25 beinhaltet die beiden Achskegelräder 29, 30 und die beiden Ausgleichskegelräder 31, 32.

Die Ausgleichskegelräder 31, 32 sind hier auf einem durchgehenden Ausgleichsbolzen 33 gelagert.

Im vorliegenden Ausführungsbeispiel sind 2 Lagerbolzen 17, 18 für die Ausgleichskegelräder 15, 16 vorgesehen, im Gegensatz zu den bisher üblichen Ausführungen, bei denen ein durchgehender Ausgleichsbolzen verwendet wird. Die getrennt ausgeführten Bolzen ergeben eine bessere Montierbarkeit sowie eine Gewichtseinsparung.

Im Ausführungsbeispiel der Figur 2 ist das Gehäuseteil 27, welches den Flansch und die Verzahnung besitzt, gewissermaßen als Deckel für das andere Gehäuseteil, den Differentialkorb 26, ausgeführt.

Die Achskegelräder 29, 30 sind hier einstückig mit ihren Lagerzapfen 34, 35 ausgebildet und zwar durch Massivumformen. Anhand des Achskegelrades 30 ist eine Möglichkeit aufgezeigt, weiteres Gewicht zu sparen, indem dort eine Ausnehmung 36, ausgehend von der Stirnseite 37, eingebracht ist.

Die Stoßstelle 28 besteht wiederum aus den mit 28b bezeichneten Anlageflächen und den mit 28a bezeichneten Zentrierflächen. Der Bolzen 33 ist hier durchgehend ausgeführt und über einen Bund 33a und einen Springring 33b gesichert.

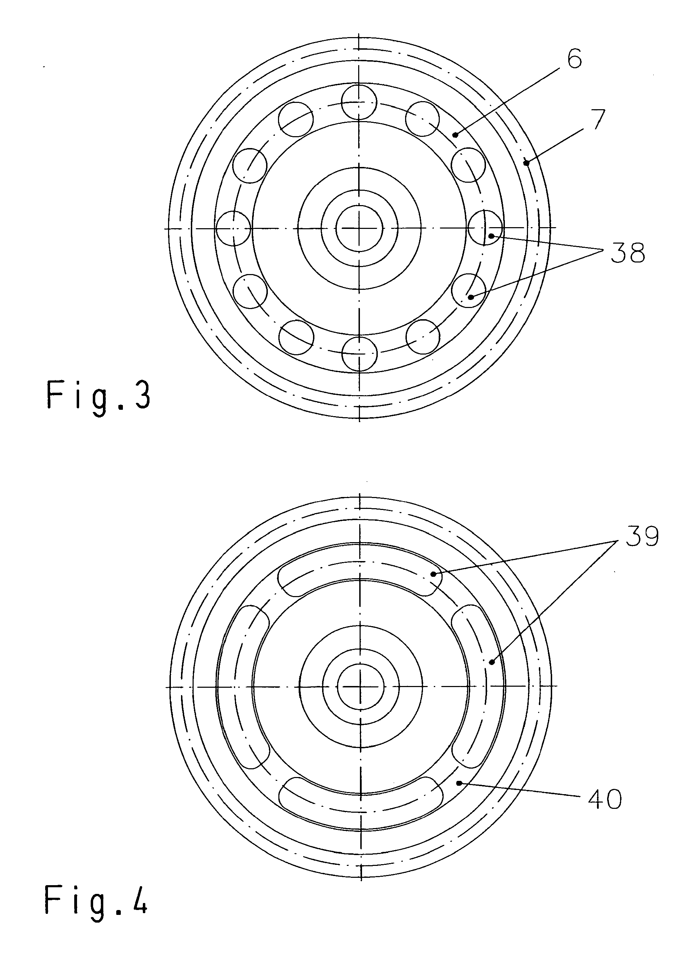

In Figur 3 ist der Flanschbereich 6 erkennbar und der daran angeformte Verzahnungsbereich 7. Der Flanschbereich 6 ist durch Ausnehmungen 38 unterbrochen, die während des Formvorganges durch Lochen eingebracht werden können und somit Gewicht sparen.

In Figur 4 sind die Ausnehmungen 39 im Flanschbereich vergrößert und es verbleiben lediglich einzelne relativ schmale Stege bzw. Speichen 40.

Es ist erkennbar, dass bei Ausführungsformen gemäß der vorliegenden Erfindung gegenüber dem Stand der Technik die Anzahl der erforderlichen Einzelteile verringert und die Zugänglichkeit des Innenbereiches für die Bearbeitung und für die Montage erheblich verbessert wird. Auch ist die Montage der zwischen die Ausgleichskegelräder und Achskegelräder und den zugekehrten Gehäuseflächen einzuführenden Kunststoffgleitmittel erleichtert. Des weiteren ist die Anzahl der Bearbeitungsvorgänge durch den Wegfall der Zentrierflächen zwischen Zahnkranz und Flansch verringert. Der Materialeinsatz wird reduziert, weil axial oder radial einander überlappende Bereiche des Flansches und des Zahnkranzes nicht erforderlich sind. Weiterhin wird die Genauigkeit, d.h. Rundlauf und Planlauf verbessert und Gewicht eingespart.

Durch entsprechende Ausgestaltung der Zapfen 34, 35 entsprechend dem in den in der allgemeinen Beschreibung genannten Patentanmeldungen kann die Anbindung von Antriebswellen, wie Seitenwellen, besonders günstig vorgenommen werden.

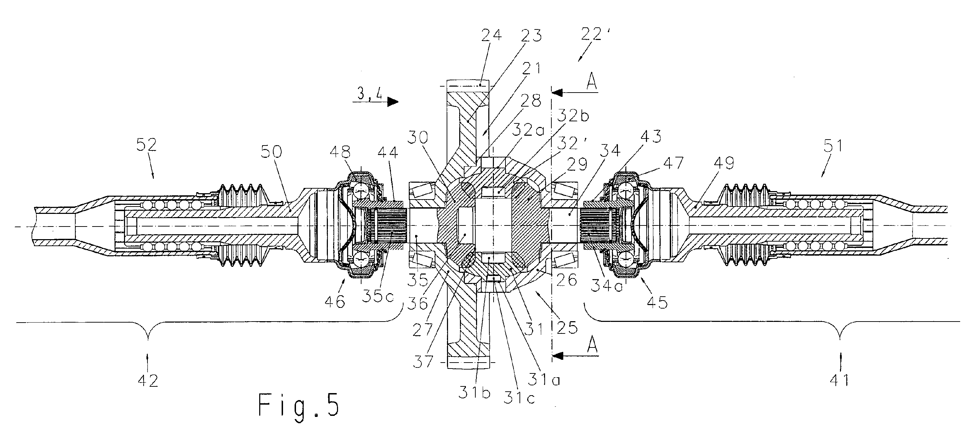

Figur 5 zeigt ein teilweise dargestelltes Antriebsaggregat, bestehend aus einem Differential 22' und daran angebundenen, teilweise dargestellten Antriebswellen 41, 42. Das Differential 22' entspricht im Grundaufbau demjenigen der Figur 2, weshalb identische Bauteile mit den gleichen Bezugszeichen versehen sind.

Es sind wiederum die Achskegelräder 29, 30 mit ihren angeformten Achszapfen 35 und 34 erkennbar und die Gehäuseteile 26 und 27.

Die Ausgleichskegelräder 31' und 32' haben je einen angeformten Lagerzapfen 31 a und 32a, der hier als Stummel ausgebildet ist, wodurch eine leichtere Montierbarkeit gegeben ist. Diese Stummel dienen im wesentlichen zur Zentrierung der Ausgleichskegelräder. Die Ausgleichskegelräder sind mit je einer Ausnehmung 31 b, 32b versehen, was eine Gewichtseinsparung ergibt.

Die Kegelradzapfen 34, 35 besitzen auf ihrer der Kegelradverzahnung abgekehrten Seite eine Keilverzahnung 34a, 35a, über die die Innennaben 43, 44 von Kugelgleichlauffestgelenken 45, 46 drehfest angeordnet sind. Die axiale Festlegung erfolgt über die hier angedeuteten Spreng- bzw. Schnappringe.

An den Gelenkaußenteilen 47, 48 sind über Umbördelungen die beiden Antriebswellenteile 49, 50 angelenkt. Die Antriebswellenteile 49, 50 sind über eine Kugelverschiebeeinheit mit weiteren Teilen der Antriebswellen 51, 52 verbunden und führen über je ein weiteres Gleichlaufgelenk, welches hier nicht dargestellt ist, zu den Antriebsrädem.

Die erfindungsgemäßen Lösungen können aber auch für Hinterradantriebe angewandt werden, sowie auch für ein- oder mehrteilige Längswellen bzw. Kardanwellen oder Nebenabtriebswellen.

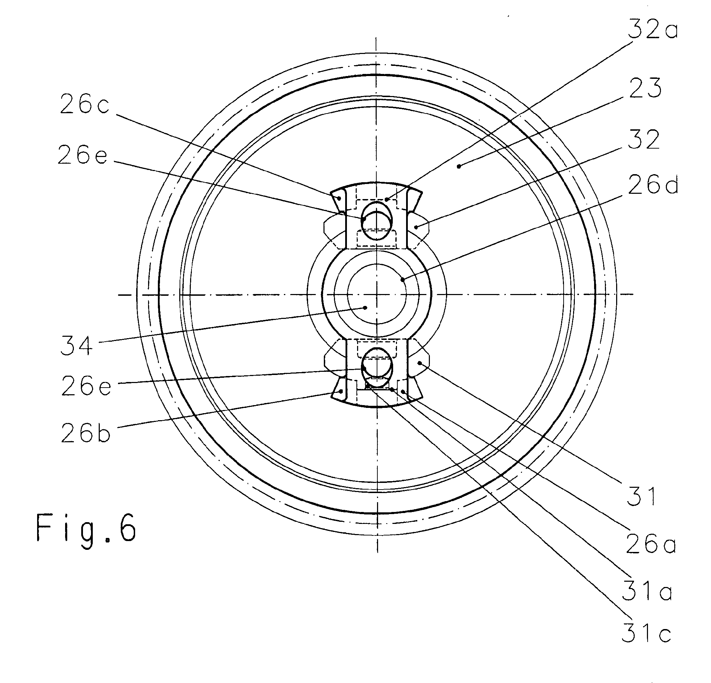

Figur 6 zeigt eine weitere Ausgestaltungsmöglichkeit der in den bisherigen Figuren als glocken- oder korbartig dargestellten Gehäusehälfte 11, auch als Differentialkorb bezeichnet. Dieses Gehäuseteil 26a ist in Figur 6 bügel- bzw. U-förmig ausgeführt und trägt an seinen U-förmigen Enden 26b, 26c die in Lagerausnehmungen vorgesehenen Lagerzapfen 31a, 32a der Ausgleichskegelräder 31, 32. Eine Ausnehmung 26b dient als Lagersitz für den Kegelradzapfen 34. Die Schenkel des U-förmigen "Differentialkorbes" sind über die hier nicht dargestellten Stoßstellen 28 der Figur 5 mit dem Antriebszahnrad 23 fest verbunden, z.B. verschweißt. Außerdem kann eine Gewichtseinsparung dadurch erreicht werden, dass in den Lagerzapfen 31 a und 32a Ausnehmungen 31 c wie in Figur 5 eingebracht werden.

Eine Möglichkeit einer Gewichtsreduzierung zeigen die mit 26b angedeuteten Öffnungen. Derartige der den Figuren 4 und 5 entsprechende Öffnungen können aber auch in den Differentialkörben 11 und 26 der Figuren 1 und 2 vorgesehen werden.

Weitere vorteilhafte Ausgestaltungen und Weiterbildungen sind jedoch nicht auf die einzelnen dargestellten und beschriebenen Ausgestaltungen beschränkt. Vielmehr können diese mit anderen, aus der Zeichnungsbeschreibung als auch aus der Figurenbeschreibung hervorgehenden Merkmale untereinander kombiniert werden, ebenso wie mit den in den hier zitierten Schriften, die integraler Bestandteil der vorliegenden Erfindung sein sollen.

## Patentansprüche

1. Mit einem Antriebsrad (21) mit auf einem Flanschbereich (23) desselben vorgesehener Verzahnung (24) versehenes Differential (22), mit in einem geteilten Gehäuse untergebrachten Kegeiradpaaren, je einem Paar Achskegeiradern (29, 30) und Ausgleichskegelrädem, (31, 32) die über Lagerzapfen (34, 35) im Gehäuse drehbar gelagert sind und von den Achskegelrädern (29, 30) jedes auf einem in je einem Gehäuseteil (26, 27) vorgesehenen Kegelradzapfen angeordnet ist und wobei
wenigstens eines der Achskegelräder (29, 30) und/oder der Ausgleichskegelräder (31, 32) einstückig ist mit dem zugehörigen Kegefradzapfen, (34, 35) wobei bei einem einstückig mit seinem Lagerzapfen (31a, 32a) ausgebildeten Ausgleichskegetrad (31, 32)
der Zapfen als Zentrieransatz wirksam ist,
wobei dase wenigstens eines der Achs- und/oder der Ausgleichskegelräder, (31, 32) von seiner Stirnseite ausgehend, in Richtung auf den Zapfen, eine Ausnehmung aufweist, **dadurch gekennzeichnet, dass** eines der Gehäuseteile (26) einstückig ist mit dem Flansch (23) und der Verzahnung des Antriebsrades, , dass das Antriebsrad (21) zwischen seinem Nabenbereich und seinem Verzahnungsbereich speichenartig ausgebildet ist, und dass
die egelradzapfen (34, 35) auf ihrer der Kegelradverzahnung abgekehrten Seite eine Keilverzahnung (34a, 35a), besitzen, über die die Innenneben 43, 44 von Kugelgleichlauffestgelenken 45, 48 drehfest angeordnet sind.

2. Differential, nach Anspruch 1, **dadurch gekennzeichnet, dass** die beiden Gehäuseteile (26, 27) über eine sich im axialen Bereich der Verzahnung (24) des Antriebsrades (21) befindenden Trenn- bzw. Fügestelle (28) miteinander verbunden sind.

3. Differential nach Anspruch 2, **dadurch gekennzeichnet, dass** die Trenn- bzw. Fügestelle (28) durch je eine Zentrierfläche und je eine axiale Anlagefläche auf beiden Gehäuseteilen (26, 27) gebildet ist.

4. Differential, nach einem der vorhergehenden Ansprüche, **dadurch gekennzeichnet, dass** eines der Gehäuseteile, der Differentialkorb (26), Aufnahmeöffnungen für den oder die Lagerzapfen (31a, 32a), für die Ausgleichskegelräder (31, 32), aufweist und einstückig ist mit dem die Verzahnung aufweisenden Antriebsrad und dass dieses Gehäuseteil unmittelbar Stützlagerflächen für das unmittelbar an dieses anlaufende Achskegelrad bildet.

5. Differential, nach einem der vorhergehenden Ansprüche, **dadurch gekennzeichnet, dass** das einstückig mit der Verzahnung (24) ausgebildete Antriebsrad (21) das eine Gehäuseteil (27) ist und das andere (26) das Aufnahmeöffnungen für die Lagerzapfen der Ausgleichskegelräder (31, 32) aufwelsende Gehäuseteil und dass dieses Gehäuseteil, der Differentialkorb, (26) unmittelbar Stützlagerflächen für das unmittelbar an dieses anlaufende Achskegelrad (29) bildet.

6. Differential, nach Anspruch 5, **dadurch gekennzeichnet, dass** eine Trenn- bzw. Fügestelle (28) zwischen Differentialkorb und dem anderem Gehäuseteil außerhalb des radialen Abstützbereiches für die Ausgleichskegelräder vorgesehen ist.

7. Differential, nach einem der vorhergehenden Ansprüche, **dadurch gekennzeichnet, dass** die beiden Gehäuseteile über eine Stoßstelle (28) unlösbar miteinander verbunden sind.

8. Differential, nach einem der vorhergehenden Ansprüche 1 - 7, **dadurch gekennzeichnet, dass** der wenigstens eine, einstückig mit seinem Achskegelrad (29, 30) hergestellte Kegelradzapfen (34, 35) ein Profil (34a, 35a) wie eine Längsverzahnung aufweist, insbesondere zur Aufnahme eines Innengelenkteiles eines Gleichlaufdrehgelenkes (45, 46) an dessen Gelenkaußenteil eine (47, 48) Antriebswelle angebunden ist.

9. Achsaggregat für Kraftfahrzeuge zur Verwendung zwischen zwei Getrieben oder einem Getriebe und einem anzutreibenden Rad, mit einem Differential nach einem der Ansprüche 1 bis 8, dessen wenigstens eines der Achskegelräder (29, 30) einstückig mit dem zugeordneten Kegelradzapfen (34, 35) ausgebildet ist, an dessen dem Achskegelrad (29, 30) abgekehrter Seite über eine Verbindung, wie eine Keilwellenverzahnung, (34a, 35a) das Gelenkinnenteil eines Gleichlaufdrehgelenkes (45, 46) befestigbar ist und wobei am Gelenkaußenteil (47, 48) die Antriebswelle des Achsaggregates befestigbar und zwischen Achskegelrad und weiterem Getriebe oder Rad wenigstens eine, eine Längsverschiebung zulassende Einheit vorgesehen ist.

10. Achsaggregat, nach Anspruch 10, **dadurch gekennzeichnet, dass** das Gleichlaufdrehgelenk eine Axialverschiebung zulässt.

## Claims

1. Differential (22) provided with a drive wheel (21) having gear teeth (24) provided on a flange area (23) thereof, comprising two pairs of bevel gears disposed in a two-part housing, one of the pairs of bevel gears being a pair of axle bevel gears (29, 30) and the other pair of bevel gears being a pair of compensating bevel gears (31, 32) which are rotatably mounted in the housing on bearing shafts (34, 35) and each of the axle bevel gears (29, 30) being located in an associated bevel gear shaft in each housing part (26, 27), wherein at least one of the axle bevel gears (29, 30) and/or compensating bevel gears (31, 32) is constructed integrally in one piece with its associated bevel gear shaft (34, 35),
wherein the bearing shaft (31 a, 32a) provides a centering shoulder for a compensating bevel gear (31, 32) constructed integrally in one piece with said shaft, and wherein at least one of the axle and/or compensating bevel gears (31, 32) is provided with a recess in its end face as viewed in the direction facing toward the shaft, **characterized in that**
one of the housing parts (26) is constructed integrally in one piece with the flange (23) and gear teeth of the drive wheel, the drive wheel (21) has spokes between its hub and the gearing, and the bevel gear shafts (34, 35) have splines (34a, 35a) on the side of the axle assembly opposite to the bevel gears by means of which the inner hubs (43, 44) of constant velocity fixed ball joints (45, 46) are mounted thereon in a rotationally fixed manner.

2. Differential according to claim 1, **characterized in that** the two housing parts (26, 27) are joined together at a connecting surface (28) arranged coaxially to the gear teeth (24) of the drive wheel (21).

3. Differential according to claim 2, **characterized in that** said connecting surface (28) comprises a centering surface and an axial contact surface on each of the two housing parts (26, 27).

4. Differential according to one of the previous claims, **characterized in that** one of the two housing parts, the differential casing (26), is provided with openings for the bearing shaft or shafts (31a, 32a) of the compensating bevel gears (31, 32) and is constructed integrally in one piece with the drive wheel with gear teeth and wherein said housing part directly forms a supporting bearing surface for the axle bevel gear rotatably mounted thereon.

5. Differential according to one of the previous claims, **characterized in that** the drive wheel (21) constructed integrally in one piece with gear teeth (24) is one housing part (27) and the other (26) serves as a casing (26) for the differential and is provided with openings for the bearing shaft or shafts of the compensating bevel gears (31, 32), wherein this housing part directly forms a supporting bearing surface for the axle bevel gear (29) rotatably mounted thereon.

6. Differential according to claim 5, **characterized in that** a connecting surface(28) between the differential casing and the other housing part is provided outside the radial supporting area for the compensating bevel gears.

7. Differential according to one of the previous claims, **characterized in that** the two housing parts are permanently connected to one another by a welded joint (28).

8. Differential according to one of the previous claims 1 - 7, **characterized in that** the at least one bevel gear shaft (34, 35) is constructed integrally in one piece with an associated axle bevel gear (29, 30) and said bevel gear shaft is provided with longitudinal gear teeth (34a, 35a) for connecting the shaft to an inner joint part of a constant velocity joint (45, 46), said constant velocity joint having an outer joint part (47, 48) connected to a drive shaft.

9. Axle assembly for motor vehicles for use between two gears or a gear and a wheel to be driven comprising a differential according to one of the claims 1 to 8 in which at least one of
the axle bevel gears (29, 30) is constructed integrally in one piece with its associated bevel gear shaft (34, 35) and to which the inner joint part of a constant velocity joint (45, 46)
can be attached to the side of the axle assembly opposite to the axle bevel gear (29, 30) by means of a connection such as a spline (34a, 35a), wherein the drive shaft of the axle
assembly can be attached to the outer joint part (47, 48) and at least one unit that allows longitudinal displacement is provided between the axle bevel gear and the other gear or wheel to be driven.

10. Axle assembly according to claim 9, **characterized in that** the constant velocity joint allows axial displacement.

## Revendications

1. Différentiel (22) avec une roue menante (21) dotée d'une denture (24) située sur une région de bride (23) de cette roue, avec des paires de pignons coniques logées dans un carter en deux parties, à savoir une paire de planétaires (29, 30) et une paire de satellites (31, 32), qui sont montées à rotation dans le carter au moyen de tourillons (34, 35), sachant que chacun des planétaires (29, 30) est disposé sur un tourillon prévu dans une partie de carter respective (26, 27), et sachant qu'au moins un des planétaires (29, 30) et/ou des satellites (31, 32) forme une seule et même pièce avec le tourillon correspondant (34,35),
sachant que, dans le cas d'un satellite (31, 32) formant une seule et même pièce avec son tourillon (31 a, 32a), le tourillon sert de plot de centrage,
et sachant qu'au moins un des planétaires et/ou des satellites (31, 32) présente, en partant de son côté frontal et en direction du tourillon, un évidement,
**caractérisé en ce qu'**une (26) des parties de carter forme une seule et même pièce avec la bride (23) et la denture de la roue menante,
**en ce que** la roue menante (21) est réalisée à la manière de rayons entre sa région de moyeu et sa région de denture,
et **en ce que** les tourillons (34, 35) possèdent, sur leur côté éloigné de la denture de pignon conique, une denture cannelée (34a, 35a) par l'intermédiaire de laquelle les moyeux intérieurs (43, 44) de joints homocinétiques (45, 46) sont disposés en solidarité de rotation.

2. Différentiel selon la revendication 1, **caractérisé en ce que** les deux parties de carter (26, 27) sont reliées entre elles par une zone de séparation et d'assemblage (28) située dans la région axiale de la denture (24) de la roue menante (21).

3. Différentiel selon la revendication 2, **caractérisé en ce que** la zone de séparation et d'assemblage (28) est formée par une surface de centrage et une surface d'appui axiale respectives sur les deux parties de carter (26, 27).

4. Différentiel selon l'une des revendications précédentes, **caractérisé en ce qu'**une des parties de carter, la cage de différentiel (26), présente des orifices de réception pour le ou les tourillon(s) (31a, 32a) pour les satellites (31, 32) et forme une seule et même pièce avec la roue menante à denture, et **en ce que** cette partie de carter forme directement des surfaces d'appui pour le planétaire portant directement contre elle.

5. Différentiel selon l'une des revendications précédentes, **caractérisé en ce que** la roue menante (21) formant une seule et même pièce avec la denture (24) est l'une (27) des partie de carter et l'autre partie de carter (26) est la partie de carter présentant des orifices de réception pour les tourillons des satellites (31, 32), et **en ce que** cette partie du carter, la cage de différentiel (26), forme directement des surfaces d'appui pour le planétaire (29) portant directement contre elle.

6. Différentiel selon la revendication 5, **caractérisé en ce qu'**une zone de séparation et d'assemblage (28) est prévue entre la cage de différentiel et l'autre partie de carter, en dehors de la région d'appui radiale pour les satellites.

7. Différentiel selon l'une des revendications précédentes, **caractérisé en ce que** les deux parties de carter sont reliées entre elles de manière indissociable par l'intermédiaire d'une zone de joint (28).

8. Différentiel selon l'une des revendications précédentes 1 à 7, **caractérisé en ce que** le tourillon au moins unique (34, 35) formant une seule et même pièce avec
son planétaire (29, 30) présente un profil (34a, 35a) tel qu'une denture longitudinale, en particulier pour recevoir une partie intérieure d'un joint homocinétique (45, 46), à la partie extérieure (47, 48) duquel est rattaché un arbre de transmission.

9. Ensemble d'essieu pour véhicules automobiles, à utiliser entre deux mécanismes de transmission ou entre un mécanisme de transmission et une roue à entraîner, avec un différentiel selon l'une des revendications 1 à 8 dont au moins un des planétaires (29, 30) forme une seule et même pièce avec le tourillon associé (34, 35), la partie intérieure d'un joint homocinétique (45, 46) pouvant être fixée au moyen d'un assemblage tel qu'une denture cannelée (34a, 35a) sur le côté dudit tourillon qui est éloigné du planétaire (29, 30), l'arbre de transmission de l'ensemble d'essieu pouvant être fixé à la partie extérieure (47, 48) du joint, et au moins une unité autorisant un déplacement longitudinal étant prévue entre le planétaire et un autre mécanisme de transmission ou la roue.

10. Ensemble d'essieu selon la revendication 10, **caractérisé en ce que** le joint homocinétique autorise un déplacement axial.
